# EUROPEAN PATENT APPLICATION

(11) **EP 3 744 513 A1**
(43) Date of publication of application: **02.12.2020**
(21) Application number: 20171488.8
(22) Date of filing: 27.04.2020
(51) Int. Cl.: B29C 73/34, B29C 73/24, B29C 73/02

(54) **REPAIR METHOD**

(30) Priority: 29.04.2019 GB 201905925
(71) Applicant: Rolls-Royce plc, London N1 9FX (GB)
(72) Inventor: Lindley-Start, Jack, Derby, Derbyshire DE24 8BJ (GB)
(74) Representative: Rolls-Royce plc

(57) **Abstract**

A method of repairing a composite material, the composite material comprising fibres embedded in a matrix, comprises the steps of: identifying a damaged portion (53) of a composite material; applying thermal energy directly to a section of the composite material including the damaged portion, so as to remove the matrix material (51) whilst retaining the fibres (52); filling the section of the composite material with replacement matrix material.

## Description

The present disclosure relates to a method for repairing composite materials.

As is well known, a composite material is a material constructed of two dissimilar materials. A matrix of one material surrounds a reinforcing material, which may be present as a framework or mesh or fibres of another material.

Carbon fibre composites are a common example of a composite material, and are used in a variety of applications. Carbon fibre composites are formed of carbon fibres distributed within a matrix. The matrix can be a cured thermosetting polymeric material, such as an epoxy resin, consisting of long chains of repeating chemical units typically of carbon, hydrogen and nitrogen. The reinforcing carbon fibres consist of crystalline regions of carbon, which can be turbostratic, graphitic or a hybrid of both turbostratic and graphitic. The matrix acts to transfer load, via shear forces, between the significantly stiffer and stronger carbon fibres. One field in which carbon fibre composites are used is the aerospace industry. Components such as gas turbine fan blades and cases, for example, can be made of carbon fibre composites.

During service, composite components can be subjected to impact events which can result in damage to the composite material. Examples of types of composite damage can include: resin damage, debonding between the fibres and resin and fibre fracture. Damage to the composite material's resin and debonding between the fibres and resin can reduce a composite component's compressive and flexural mechanical properties, as well as the tensile properties to a lesser extent. Therefore, methods have been developed to repair such damaged components.

Within the aerospace industry the standard composite material repair technique for non-safety critical structures is to perform a so-called 'stepped' or 'scarf' patch repair. The stepped or scarf patch repairs may be initiated by machining a volume of the composite material away, typically using a milling or sanding machine, to remove the damaged material. A 'bond line' can then be created within the void via the application of an adhesive. New composite material can then be installed within the void and on top of the 'bond line'. Additional composite material, known as 'overplies', can be adhered over the top of the repair area for additional strength.

For safety critical structures within the aerospace industry, the standard composite material repair technique is the so-called 'bolted plate repair'. A bolted plate repair involves bolting a metallic or composite plate over the damaged area to act as a secondary load path.

According to a first aspect of the disclosure there is provided a method of repairing a composite material, the composite material comprising a reinforcing material embedded in a matrix, the method comprising the steps of: identifying a damaged portion of a composite material; applying thermal energy directly to a section of the composite material including the damaged portion, so as to remove the matrix material in that section of the composite material whilst retaining the reinforcing material; filling the section of the composite material with replacement matrix material.

Optionally, the step of applying thermal energy comprises heating the section of composite material above a critical temperature, below which critical temperature substantially no thermo-oxidative degradation of the matrix of the composite material occurs.

Optionally, the step of applying thermal energy comprises maintaining the temperature of the section of the matrix material below a threshold temperature, below which threshold temperature substantially no oxidation of the reinforcing material occurs.

Optionally, the step of applying thermal energy comprises irradiating the surface of the composite with thermal energy.

Optionally, irradiating the surface is performed without any barrier between the radiation source and composite material.

Optionally, the surface of composite material is not coated.

Optionally, the composite material is a carbon fibre composite.

Optionally, the carbon fibre composite comprises turbostratic graphite.

Optionally, the matrix is a resin.

Optionally, the resin is a cured thermosetting polymer.

Optionally, the resin is an epoxy resin.

Optionally, the damaged portion comprises resin damage, fibre fracture and/or debonding between the fibres and resin.

Optionally, the step of identifying comprises non-destructive inspection of the composite material.

Optionally, the reinforcing material is formed as a framework, mesh or fibres.

According to a second aspect of the disclosure there is provided a component for a gas turbine engine comprising a composite material that has been repaired according to the method of any one of the variations of the first aspect.

According to a third aspect of the disclosure there is provided a gas turbine engine for an aircraft comprising: an engine core comprising a turbine, compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, wherein the gas turbine engine comprises a component according to the second aspect.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine; and
Figure 4 is a schematic diagram of a heat source irradiating a composite material.

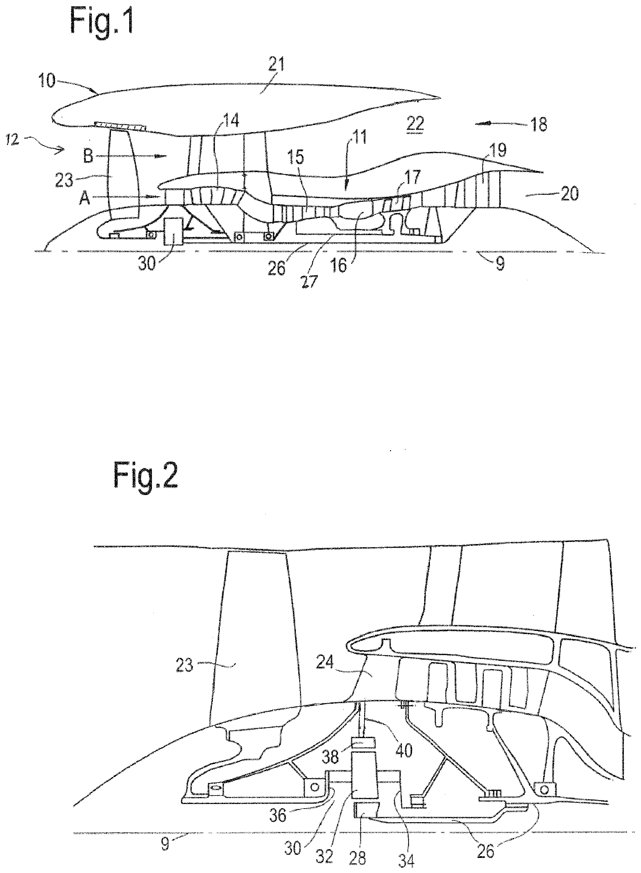

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust.

The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

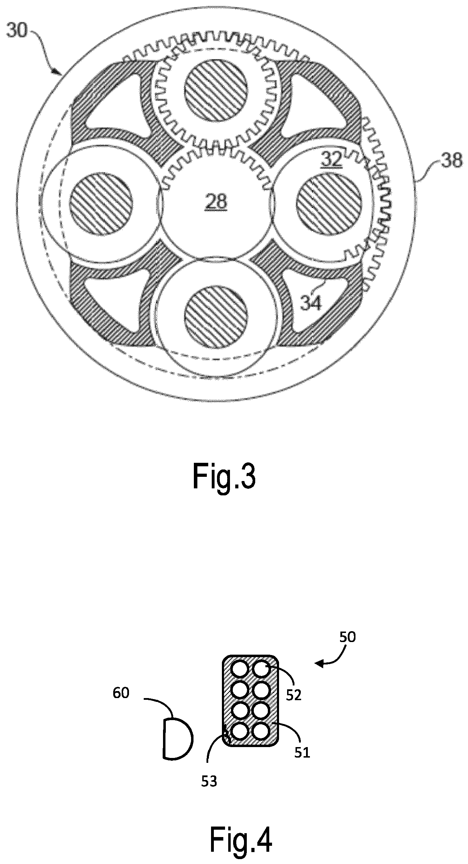

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the present disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Various components of the gas turbine engine 10, such as fan blades, may be made of composite materials. If these components suffer damage (e.g. resin damage, debonding between the fibres and resin and fibre fracture), it is desirable to repair them. However, conventional repair techniques have disadvantages.

The 'stepped' or 'scarf' patch repair approach, discussed earlier, provides challenges to aerospace certification due to the reliance on adhesive bonding. The 'breaking' of the load carrying fibres during the machining operation results in discontinuities within the component, which limits performance, particularly in compression and flexure. Additional 'overplies' are required to achieve parent structure strength and this results in a local increase in stiffness. For this reason, the technique is unable to both restore the original strength and match the parent structure's stiffness. For impact loaded components this stiffness increase could result in the premature failure of the component due to load attraction. Another disadvantage relates to the need to remove the parent structure over a relatively large area due to the shallow 'scarf angle' the technique requires, this can increase the time and cost of a repair. There are also challenges assuring the 'bond line' integrity, due to the current limitation in non-destructive testing to detect defects such as poor adhesion (e.g. so-called kissing bonds'). There are also challenges in matching the parent material's structure if complex lay ups are used such as woven or interleaved structures.

The 'bolted plate repair' discussed above can involve a significant mass penalty, due to the additional mass of the plate. Moreover, the plate will inevitably sit outside the original part mould line, which will undesirably increase the co-efficient of drag for aerospace structures such as fan blades. More generally, the bolt holes that are drilled into the parent structure to secure the plate can cause stress concentrations, which can in turn limit a structure's life. Also, the technique can be inappropriate for parts which require balancing (such as fan blades) and/or have strict external geometry requirements.

As an alternative to these procedures, 'resin removal repairs' have been mooted, but have their own disadvantages and so have not found industrial application. Such repairs rely on a method for removing the damaged resin, or alternative matrix material, whilst leaving the intact fibres behind, to allow replacement resin to be introduced. One such approach relies on the use of microwaves to heat and evaporate the resin, under an inert atmosphere, to avoid oxidation of the carbon fibres. However, such a system requiring an inert atmosphere is awkward to implement, particularly for larger components, and may result in quantities of char residue remaining which could contaminate the resin removed area and degrade the mechanical properties of the resultant repaired material. Another approach uses a laser to vaporise the resin, but is only effective up to a limited depth from the surface, because the fibres shade the resin beneath. Another approach relies on coating the composite with semiconducting powder that is then activated to remove the resin. This type of process, requiring application of a further substance to the material that is ultimately to be removed, is complicated and potentially introduces contamination into the resin removed area.

The present disclosure provides an alternative method of 'matrix removal repair' that overcomes the disadvantages discussed above. The method utilises direct heating of the matrix to remove it from the reinforcing material. The method is particularly applicable to fibre/resin composites, and is discussed in that context below. However, the skilled reader will understand that the method finds wider applicability to other types of composite where the matrix material may be degraded by heat (e.g. through other modes of action, such as by melting or evaporation).

Considering a carbon fibre composite, the matrix can be a cured thermosetting polymeric material, such as an epoxy resin, consisting of long chains of repeating chemical units typically of carbon, hydrogen and nitrogen. The reinforcing carbon fibre consists of crystalline regions of carbon, which can be turbostratic, graphitic or a hybrid of both turbostratic and graphitic.

When a thermosetting polymer is heated to a temperature within a certain range it will undergo a process known as thermo-oxidative degradation, which consists of pyrolysis followed by oxidation. The lower bound of that temperature range is a critical temperature below which substantially no thermo-oxidative degradation of the matrix of the composite material occurs. The upper bound of that temperature range is a threshold temperature below which substantially no oxidation of the reinforcing material occurs. These bounds are material dependent.

Pyrolysis begins when the thermal energy of the polymer becomes sufficient to break the weakest bonds within the polymer backbone, which is a process called 'chain scission'. As the process temperature increases additional, more stable, bonds will also be broken. As a result, the polymer will be broken down into low molecular weight hydrocarbons, which are released from the solid material as gaseous volatiles. The remaining material consists of a combination of alkyl substituted aromatic species and solely aromatic species. The aromatic species will then start to condense into amorphous aromatic structures known as 'char'. As the temperature increases further the remaining hydrocarbon side groups will be released as volatiles.

The oxidation begins once a specific local temperature threshold is reached. The amorphous 'char' then reacts with atmospheric oxygen to produce CO₂, which is released as a gas. The oxidation of the char continues until no char material remains.

Although discussed as two separate steps above, the formation of the char and the oxidation of the char occur concurrently in the thermo-oxidative degradation process.

Surprisingly, although carbon fibres and the char material are both constructed of aromatic species, it has been determined that it is possible to remove matrix resin material without damaging the carbon filler fibres. This is because the materials have different thermal stabilities, which is due to the fact that the carbon fibres have a greater crystalline character than the char. These differences in structures produce different thermal stabilities, which translate into differing oxidation profiles.

As such, whilst heating a carbon fibre in an environment containing oxygen will cause some initial mass loss due to the removal of any 'binder' at low temperatures (i.e. below approximately 150 degrees centigrade), the carbon fibre itself does not react. At a threshold temperature the local temperature becomes sufficient for the carbon fibres to react with the atmospheric oxygen to produce CO₂, which is released as a gas. This production of CO₂ results in a reduction in the fibres' masses and a corresponding reduction in the mechanical performance of the fibres. The process of fibre oxidation increases in rate with an increase in temperature.

The difference in temperatures, between those required for thermo-oxidative degradation of the matrix and those which cause oxidation of the reinforcing fibres, can be exploited to implement a 'resin removal repair' method. This is described below with reference to Figure 4 which shows a schematic view of a damaged composite and heating apparatus.

Once a damaged portion 53 of composite 50 has been identified, for example by a non-destructive inspection technique, thermal energy may be applied directly to a targeted section of the composite material 50 including the damaged portion. Unlike a scarf repair, for example, there is no need for the section that is treated to be much larger than the damaged portion - that is the treated section may be of a very similar size and shape to the damaged portion. However, in some applications it may be advantageous for the treated section to be larger than the damaged portion e.g. to shape the repair to avoid future stress concentrations.

The thermal energy can be applied by using an infrared lamp 60, for example, but any source of direct heat may be used.

The thermal energy is applied directly to the composite material 50. In other words, there is no need for any intermediary layer or barrier between the heat source 60 and the composite 50, or any coating applied to the composite 50 (such as the semiconductor coatings, mentioned above, used in other approaches). Indeed, preferably such intermediary layers, barriers and/or coatings are not present, as this keeps the process as simple as possible and avoids unnecessary expense. In other words, the composite 50 preferably receives the radiated heat directly from the radiation source 60.

The application of the thermal energy can be controlled so as to heat the section of the composite material 50 above the critical temperature necessary to remove the matrix material 51. That can be the temperature to bring about thermo-oxidative degradation of a matrix material 51 such as a resin material. The control can further prevent the temperature of the section from exceeding a threshold temperature which would damage the reinforcing material 52. For example, in a carbon fibre composite 50, the control may keep the temperature above the critical temperature for thermo-oxidative degradation of the matrix 51 whilst maintaining the temperature below the threshold temperature at which the carbon fibre 52 would undergo oxidation. As such, the matrix 51 is removed but the reinforcing material 52 is retained. By operating between this critical temperature and threshold temperature, the method exploits a temperature window that allows removal of the matrix 51 without causing damage to the reinforcing material 52.

In experiments conducted on a commercially available carbon fibre composite, with an epoxy matrix, the critical temperature was 550 degrees Celsius and the threshold temperature was 600 degrees Celsius.

After the damaged matrix 53 has been removed, new matrix material can be provided in the section of the composite 50 being repaired. For example, considering a resin matrix 51, the section being repaired may be filled with resin which can then be cured. This process allows the new matrix to bind not only to the reinforcing material 52 but also to the surrounding areas of matrix material 51.

To preserve the original characteristics of the component being prepared, the new matrix material is preferably the same as the original matrix material. That way, the repaired component will have properties (weight, strength, flexibility etc.) as close to those of the original component as possible. The absence of an additional adhesive, e.g. in contrast to a scarf repair, also means this technique has the potential to be certified for safety critical aerospace components - the original load carrying fibres are maintained, and so the technique does not rely on additional adhesives to transfer the primary load.

Moreover, because the process retains the original reinforcing material architecture, this repair technique can be used to restore the performance of components with complex fibre architectures. This could be useful for components that utilise woven reinforcing materials or have reinforcing materials that feature interleaving.

It will be understood that the present disclosure is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of repairing a composite material, the composite material comprising a reinforcing material embedded in a matrix, the method comprising the steps of:
identifying a damaged portion of a composite material;
applying thermal energy directly to a section of the composite material including the damaged portion, so as to remove the matrix material in that section of the composite material whilst retaining the reinforcing material;
filling the section of the composite material with replacement matrix material.

2. The method of Claim 1, wherein the step of applying thermal energy comprises heating the section of composite material above a critical temperature, below which critical temperature substantially no thermo-oxidative degradation of the matrix of the composite material occurs.

3. The method of Claim 1 or Claim 2, wherein the step of applying thermal energy comprises maintaining the temperature of the section of the matrix material below a threshold temperature, below which threshold temperature substantially no oxidation of the reinforcing material occurs.

4. The method of any one of the preceding claims, wherein the step of applying thermal energy comprises irradiating the surface of the composite with thermal energy.

5. The method of Claim 4, wherein irradiating the surface is performed without any barrier between the radiation source and composite material.

6. The method of Claim 4 or Claim 5, wherein the surface of composite material is not coated.

7. The method of any one of the preceding claims, wherein the composite material is a carbon fibre composite.

8. The method of Claim 7, wherein the carbon fibre composite comprises turbostratic graphite.

9. The method of any one of the preceding claims, wherein the matrix is a resin.

10. The method of Claim 9, wherein the resin is a cured thermosetting polymer.

11. The method of Claim 9 or Claim 10, wherein the resin is an epoxy resin.

12. The method of any one of the preceding claims, wherein the damaged portion comprises resin damage, fibre fracture and/or debonding between the fibres and resin.

13. The method of any one of the preceding claims, wherein the step of identifying comprises non-destructive inspection of the composite material.

14. The method of any one of the preceding claims, wherein the reinforcing material is formed as a framework, mesh or fibres.

15. A component for a gas turbine engine comprising a composite material that has been repaired according to the method of any one of Claims 1 to 14.
